## Europäisches Patentamt

## European Patent Office

## Office européen des brevets

(11) Veröffentlichungsnummer: **0 196 269**
**B1**

(12) **EUROPÄISCHE PATENTSCHRIFT**

(45) Veröffentlichungstag der Patentschrift:
**15.02.89**

(51) Int. Cl.⁴: **B65G 67/04, B65G 69/24**

(21) Anmeldenummer: **86730049.3**

(22) Anmeldetag: **17.03.86**

(54) **Beladevorrichtung für Lastkraftwagen.**

(30) Priorität: **29.03.85 DE 3511445**

(43) Veröffentlichungstag der Anmeldung:
**01.10.86 Patentblatt 86/40**

(45) Bekanntmachung des Hinweises auf die Patenterteilung:
**15.02.89 Patentblatt 89/7**

(84) Benannte Vertragsstaaten:
**AT BE CH FR GB IT LI LU NL SE**

(56) Entgegenhaltungen:
**DE-A- 3 132 899**
**DE-A- 3 316 419**
**DE-A- 3 327 182**

(73) Patentinhaber: **Staege, Rüdiger, Am Pfuhl 11-13,
D-1000 Berlin 45(DE)**

(72) Erfinder: **Staege, Rüdiger, Am Pfuhl 11-13,
D-1000 Berlin 45(DE)**

(74) Vertreter: **Presting, Hans-Joachim, Dipl.-Ing. et al,
Patentanwaltsbüro Meissner & Meissner
Herbertstrasse 22, D-1000 Berlin 33 West(DE)**

## Beschreibung

Die Erfindung betrifft eine Beladevorrichtung gemäß Oberbegriff des Patentanspruchs 1.

Derartige Vorrichtungen sind z.B. durch die DE-OS 3 316 419 und DE-OS 3 132 899 bekannt. Beim Beladen von Lastwagen oder Anhängern über eine Überladebrücke, die in ihrem Höhenniveau einerseits mit dem der Ladefläche und dem der die Lademaschine tragenden Plattform übereinstimmen sollte, ergibt sich das Problem, daß infolge der mit zunehmender Ladung größer werdenden Absenkung der Ladefläche ein entsprechender Niveauausgleich erfolgen muß, damit die Überfahrt der Lademaschine praktisch ohne jede Stufe erfolgen kann.

Der Erfindung liegt die Aufgabe zugrunde, eine Vorrichtung der eingangs genannten Art so auszubilden, daß mit relativ einfachen Mitteln ein ständiger Niveauausgleich zwischen der Ladekante und der Überladebrücke erreicht wird.

Diese Aufgabe wird erfindungsgemäß mit den im Kennzeichen des Patentanspruchs 1 angegebenen Merkmalen gelöst.

Die weitere Ausbildung des Erfindungsgegenstandes geht aus den Unteransprüchen hervor.

Der mit der Erfindung erzielte Vorteil besteht darin, daß mit verhältnismäßig geringem konstruktiven und vorrichtungsmäßigen Aufwand erreicht wird, daß die Heckladekante des zu beladenden Lastkraftwagens oder Anhängers auf dem Niveau der Überladebrücke gehalten werden kann.

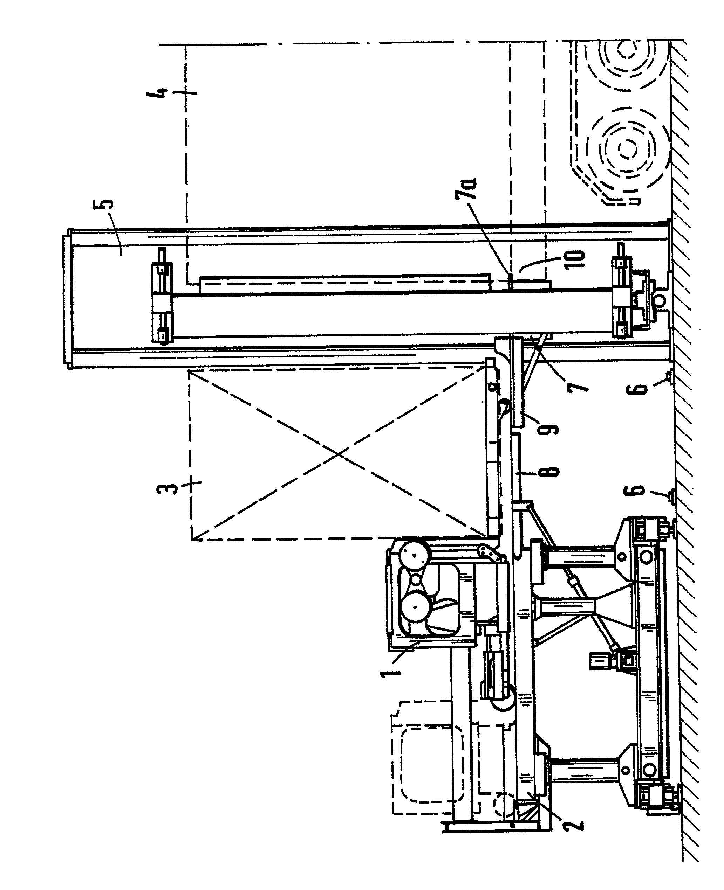

Ein Ausführungsbeispiel der Erfindung ist in der Zeichnung dargestellt und wird nachstehend anhand einer Figur beschrieben, die eine Seitenansicht der Beladevorrichtung zeigt. Dargestellt ist die Phase des Beladungsvorgangs, in der eine oder mehrere nebeneinanderstehende Paletten in den Laderaum eines Lastkraftwagens eingefahren werden.

Eine nach dem Hubgabelprinzip arbeitende fahrerlose Lademaschine 1 transportiert von einer höhenverstellbaren Plattform 2 aus Paletten 3 in einen Lastwagen 4, der sich mit seinem Heck in einer Schleuse 5 befindet, mittels der seine Position in bezug auf die Fahrtrichtung der Lademaschine festgelegt ist. Bei der in der Zeichnung dargestellten Arbeitsphase ist eine Sammelplattform, von der die Lademaschine die Paletten 3 zuvor abgehoben hat, bereits aus dem Bereich zwischen Plattform 2 und Schleuse 5 entfernt, d.h. auf Schienen 6 beiseite gefahren. Die Überfahrt der Lademaschine 1 zur Ladefläche des Lastkraftwagens 4 erfolgt über eine Überladebrücke 7, die höhenverstellbar in der Schleuse 5 angeordnet ist. Der Abstand zwischen Überladebrücke 7 und Plattform 2 wird durch schwenkbare Brückenteile 8 bzw. 9 überbrückt, die an der Plattform 2 bzw. an der Überladebrücke 7 angelenkt sind. Die Überladebrücke 7 ist mit einem die Heckladekante 10 übergreifenden Teil 7a ausgestattet. Mit hier nicht dargestellter hydraulischer oder anderweitig angetriebener Vorrichtung ist die Überladebrücke 7 höhenverstellbar. Im praktischen Betrieb wird die Überladebrücke aus einer Ausgangsstellung, in der sie sich mit ihrem Teil 7a über der Ladekante der unbelasteten Ladefläche befindet, abwärtsbewegt, bis sie die Ladekante erfaßt und so belastet, daß die auf die Kante 10 wirkende Kraft der Last entspricht, die sich bei jeder einzelnen Einfahrt der Lademaschine aus dem Gesamtgewicht der auf der Ladefläche abzustellenden Paletten plus dem Gewicht der Lademaschine ergibt. Dabei ist die Überladebrücke während jedes vollständigen Beladungsvorgangs in vorgewählter, in Abhängigkeit von der Überfahrlast stehender Höhenstellung fixiert, d.h. die Vorlast und die durch die Ladung aufgebrachte Last können sich nicht addieren.

## Patentansprüche

1. Beladevorrichtung für automatische heckseitige Beladung von Lastkraftwagen oder Anhängern mit Paletten mittels nach dem Hubgabelprinzip arbeitender fahrerloser Lademaschine, die von einer höhenverstellbaren Plattform aus die Paletten von einer Sammelplattform übernimmt und über eine höhenverstellbare Überladebrücke in den Lastwagen bzw. Anhänger einfährt, der sich mit seinem Heck in einer Schleuse befindet, mittels der seine Position in bezug auf die Fahrtrichtung der Lademaschine festgelegt ist, dadurch gekennzeichnet, daß die Überladebrücke (7) in der das Lastwagen- bzw. Anhängerheck aufnehmenden Schleuse (5) angeordnet und mit Mitteln zum belasteten Absenken der Ladefläche versehen ist.

2. Beladevorrichtung nach Anspruch 1, dadurch gekennzeichnet, daß die Überladebrücke (7) mit einem die Heckladekante (10) des Lastkraftwagens bzw. Anhängers übergreifenden Teil (7a) ausgestattet ist.

3. Beladevorrichtung nach einem der vorstehenden Ansprüche, dadurch gekennzeichnet, daß die Überladebrücke (7) in vorgewählten, in Abhängigkeit von der Überfahrlast stehenden Höhenstellungen fixierbar ist.

## Claims

1. Loading device for automatic rear-end loading of commercial vehicles or trailers with pallets by means of a driverless loading machine which operates according to the fork-lift principle and, working from a vertically adjustable platform, takes the pallets from a collecting platform and drives them into the commercial vehicle or trailer via a vertically adjustable transfer bridge, said commercial vehicle or trailer being located with its rear end in a bay, by means of which its position with respect to the driving direction of the loading machine is determined, characterized in that the transfer bridge (7) is arranged in the bay (5) accommodating the rear end of the commercial vehicle or trailer and is provided with means for lowering, under load, the loading surface.

2. Loading device according to Claim 1, characterized in that the transfer bridge (7) is equipped with a part (7a) which overlaps the rear loading edge (10) of the commercial vehicle trailer.

3. Loading device according to one of the preceding claims, characterized in that the transfer bridge (7) can be fixed in preselected vertical positions which depend on the transfer load.

## Revendications

1. Dispositif pour le chargement automatique par l'arrière de camions ou de remorques avec des palettes, au moyen d'une machine de chargement sans conducteur travaillant selon le principe de la fourche de levage, qui reçoit, à partir d'une plate-forme réglable en hauteur, les palettes d'une plate-forme de rassemblement et les charge dans le camion ou la remorque, par l'intermédiaire d'un pont de transbordement, camion ou remorque dont l'arrière se trouve dans un sas, au moyen duquel est fixée sa position relativement au sens de marche de la machine de chargement caractérisé en ce que le pont de transbordement (7) est disposé dans le sas (5) recevant l'arrière du camion ou de la remorque et est muni de moyens pour abaisser la surface de chargement, en la soumettant à une charge.

2. Dispositif de chargement selon la revendication 1, caractérisé en ce que le pont de transbordement (7) présente une partie (7a) recouvrant le bord de chargement arrière (10) du camion ou de la remorque.

3. Dispositif de chargement selon une des revendications précédentes, caractérisé en ce que le pont de transbordement (7) peut être fixé à des hauteurs présélectionnées, dépendant de la charge transbordée.